## Europäisches Patentamt

## European Patent Office

## Office européen des brevets

(19)

(11) Veröffentlichungsnummer: **0 140 283**
**B1**

(12)

# EUROPÄISCHE PATENTSCHRIFT

(45) Veröffentlichungstag der Patentschrift:
**07.01.88**

(51) Int. Cl.⁴: **G 21 C 21/00**, G 21 C 3/32, **B 23 K 11/10**

(21) Anmeldenummer: **84112525.5**

(22) Anmeldetag: **17.10.84**

---

(54) Verfahren zum Zusammenbau eines Kernreaktorbrennelementes.

---

(30) Priorität: **28.10.83 DE 3339241**

(43) Veröffentlichungstag der Anmeldung:
**08.05.85 Patentblatt 85/19**

(45) Bekanntmachung des Hinweises auf die Patenterteilung:
**07.01.88 Patentblatt 88/1**

(84) Benannte Vertragsstaaten:
**BE DE FR GB IT SE**

(56) Entgegenhaltungen:
EP - A - 0 082 075
FR - A - 2 411 469
US - A - 4 048 463
US - A - 4 239 953

PATENTS ABSTRACTS OF JAPAN, Band 7, Nr. 44
(M-195)(1189), 22 Februar 1983; JP - A - 57 193 287

(73) Patentinhaber: **REAKTOR-BRENNELEMENT UNION GmbH, Postfach 11 00 60, D-6450 Hanau 11 (DE)**

(72) Erfinder: **Ritter, Harry, Georg-Busch-Strasse 8, D-6450 Hanau 7 (DE)**

(74) Vertreter: **Mehl, Ernst, Dipl.-Ing. et al, Postfach 22 01 76, D-8000 München 22 (DE)**

---

## Beschreibung

Die Erfindung betrifft ein Verfahren zum Zusammenbau eines Kernreaktorbrennelementes, welches ein Kopf- und ein Fussteil sowie gitterförmige Abstandshalter für Kernbrennstoff enthaltende Stäbe und Steuerstabsführungsrohre aufweist, von denen die Steuerstabsführungsrohre jeweils in einem ersten Arbeitsgang in die Abstandshalter eingefädelt und in einem nachfolgend zweiten Arbeitsgang aussen an Schweissstellen durch Widerstandspunktschweissen mit Haltekörpern, insbesondere mit Haltehülsen für die Abstandshalter und/oder Kopf- und Fussteil versehen werden.

Bei einem solchen Kernreaktorbrennelement sind die Steuerabführungsrohre jeweils in einer quadratischen Gittermasche durch mehrere quadratische gitterförmige Abstandshalter geführt, die in Richtung der Längsachse der Steuerstabführungsrohre und damit auch des Brennelementes gesehen in der Regel gleichen Abstand voneinander haben und die untereinander und mit der Kopfplatte des Kopfteiles und mit der Fussplatte des Fussteiles des Kernreaktorbrennelementes fluchten. Kopf- und Fussteil bilden zusammen mit den Steuerstabführungsrohren und den Abstandshaltern das sogenannte Skelett des Kernreaktorbrennelementes. Brennstäbe, die Kernbrennstoff in gasdicht verschlossenen Hüllrohren enthalten, sind durch die nicht von den Steuerstabführungsrohren besetzten quadratischen Gittermaschen des Abstandshalters geführt. Während die Steuerstabführungsrohre jeweils über eine Haltehülse aussen am Rohrende mit der Kopfplatte des Kopfteiles und unmittelbar mit der Fussplatte des Fussteiles des Kernreaktorbrennelementes verschraubt sind und aufgrund von aussen angeschweissten Haltehülsen als Halterohre für die Abstandshalter wirken, sind die Brennstäbe weder an der Kopfplatte des Kopfteiles noch an der Fussplatte des Fussteiles befestigt, sondern sie haben zwischen Kopf- und Fussplatte in Längsrichtung Spiel und können sich daher in Richtung ihrer Längsachse, d.h. in Längsrichtung des Kernreaktorbrennelementes frei ausdehnen. Durch Federelemente, die sich in den betreffenden Maschen an den Abstandshaltern befinden, sind diese Brennstäbe kraftschlüssig gehalten.

Es ist bereits üblich, zum Anschweissen der Haltehülsen für die Abstandshalter und z.B. das Kopfteil an einem beim Zusammenbau eines Kernreaktorbrennelementes in die Abstandshalter eingefädelten Steuerstabführungsrohre innen im Steuerstabführungsrohr eine Fest- oder eine Spreizelektrode, die sich am Ende einer Stange befindet, zu positionieren und mit der Stange von Schweissstelle zu Schweissstelle zu verschieben. Da diese Verfahrensweise – die jeweilige Schweissstelle muss ja mit der Fest- oder der Spreizelektrode genau getroffen werden – sehr zeitraubend ist, liegt der Erfindung die Aufgabe zugrunde, das übliche Verfahren so weiterzubilden, dass der Zeitaufwand beim Anschweissen der Haltehülsen an den Steuerstabführungsrohren erheblich verringert wird.

Zur Lösung dieser Aufgabe ist ein Verfahren der eingangs erwähnten Art erfindungsgemäss dadurch gekennzeichnet, dass zum Widerstandspunktschweissen nach dem ersten Arbeitsgang eine aussen Stützverdickungen aufweisende Stange in das in die Abstandshalter eingefädelte Steuerstabführungsrohr so eingeschoben wird, dass sich zumindest an jeder Schweissstelle dieses Steuerstabführungsrohres eine Stützverdickung befindet, und dass sodann im zweiten Arbeitsgang die Haltekörper mit den beiden Schweisselektroden einer elektrischen Schweisszange gegen die Schweissstellen aussen am Steuerabführungsrohr gepresst werden.

Die Stützverdickungen können aussen an der Stange so verteilt sein, dass sie sich genau an den Sollschweissstellen für die Haltekörper befinden, wenn die mit den Stützverdickungen versehene Stange mit einem Anschlagkörper aussen an dem Rohrende des Steuerstabführungsrohres anschlägt, an dem sie in dieses Steuerstabführungsrohr hineingeschoben wurde. Gegebenenfalls nach entsprechender Positionierung der Haltekörper aussen am Steuerstabführungsrohr können diese Haltekörper zügig mit der elektrischen Schweisszange aussen am Steuerstabführungsrohr festgeschweisst werden. Hierbei verhindern die Stützverdickungen, dass das Steuerstabführungsrohr und auch die Haltekörper an den Schweissstellen mit der Schweisszange verformt werden. Die Haltekörper können Haltehülsen aussen auf dem Steuerstabführungsrohr für die Abstandshalter oder, sofern sie sich an einem Ende des Steuerstabführungsrohres befinden und mit einem Innengewinde versehen sind, für das Kopf- oder Fussteil des Kernreaktorbrennelementes sein. Im letzten Fall wird das Kopf- oder Fussteil mit der Haltehülse verschraubt. Bei den Haltekörpern kann es sich aber auch z.B. um Haltezungen handeln, die an den Abstandshaltern ausgebildet sind.

Von Vorteil ist es, wenn eine als Rohr ausgebildete Stange verwendet wird, die durch die Stützverdickungen eine in den Rohrinnenraum mündende Radialbohrung aufweist, und wenn beim Einschieben dieser Stange in das Steuerabführungsrohr und/oder beim Herausziehen dieser Stange aus dem Steuerabführungsrohr ein Gas, vorzugsweise Luft, durch die als Rohr ausgebildete Stange und die Radialbohrungen in das Steuerstabführungsrohr geblasen wird. Hierdurch bildet sich im Steuerstabführungsrohr eine Art Luftkissen zwischen den Stützverdickungen und der Innenwand des Steuerstabführungsrohres aus, so dass diese Stützverdickungen weder beim Einschieben noch beim Herausziehen der Stange mit der Innenwand des Steuerstabführungsrohres verkanten, d.h. sich am Steuerstabführungsrohr festfressen können.

Die Erfindung und ihre Vorteile seien anhand der Zeichnung an einem Ausführungsbeispiel näher erläutert:

Fig. 1 zeigt in perspektivischer Draufsicht einen Assembliertisch für ein Kernreaktorbrennelement.

Fig. 2 zeigt in Seitenansicht eine Stange mit Stützverdickungen zum Einschieben in ein in Fig. 1 dargestelltes Steuerstabführungsrohr eines Kernreaktorbrennelementes.

Fig. 3 zeigt im Längsschnitt und vergrössert einen Endkörper A an dem Ende der Stange nach Fig. 2, das in das Steuerstabführungsrohr hineingeschoben wird.

Fig. 4 zeigt im Längsschnitt und vergrössert eine der Stützverdickungen B aussen an der Stange nach Fig. 2.

Fig. 5 zeigt im Längsschnitt und vergrössert einen Anschlagkörper C am anderen, nicht in das Steuerstabführungsrohr eingeführte Ende der Stange nach Fig. 2.

Fig. 6 zeigt im Längsschnitt ein Anschlussteil D für einen Pressluftschlauch an demselben Ende der Stange nach Fig. 2, an dem sich auch der Anschlagkörper C befindet.

Fig. 7 zeigt in Seitenansicht ein Steuerstabführungsrohr in einem Abstandshalter auf dem Assembliertisch nach Fig. 1.

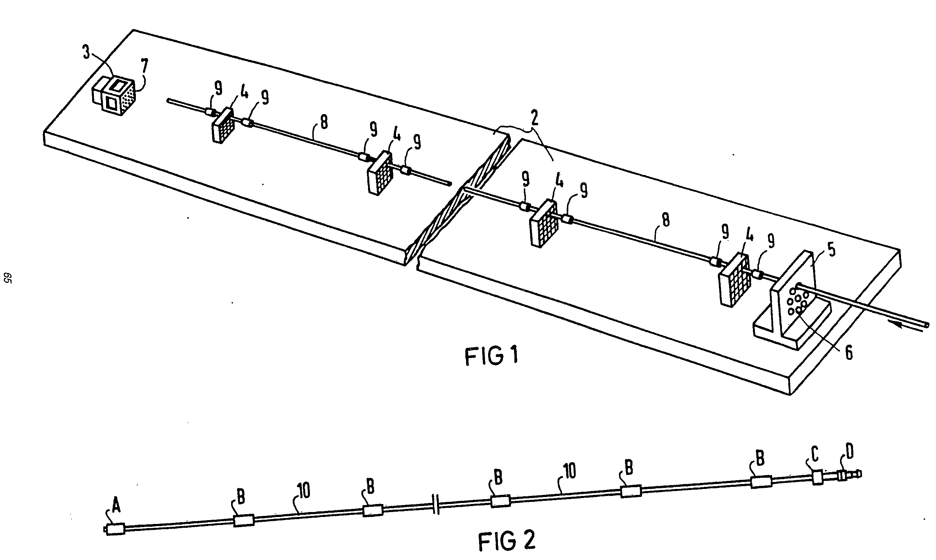

Auf dem Assembliertisch 2 nach Fig. 1 sind ein Fussteil 3 für ein Kernreaktorbrennelement und mehrere gitterförmige Abstandshalter 4 für dieses Kernreaktorbrennelement miteinander fluchtend und in den im Kernreaktorbrennelement vorgesehenen Abständen voneinander fest positioniert. An dem Ende mit dem Fussteil 3 entgegengesetzten Ende des Assembliertisches 2 ist ferner eine Schablone 5 fest positioniert mit Bohrungen 6, die jeweils genau mit den Maschen der Abstandshalter 4 und den Bohrungen in der Fussplatte 7 des Fussteiles 3 fluchten, die für die Steuerstabführungsrohre des zusammenzubauenden Kernreaktorbrennelementes bestimmt sind.

In Fig. 1 ist auch ein solches Steuerstabführungsrohr 8 dargestellt, das an mindestens einem Rohrende offen ist und das gerade durch die Schablone 5 und die Abstandshalter 4 eingefädelt wird. Beiderseits der Abstandshalter 4 sitzen aussen auf dem Steuerstabführungsrohr 8 Haltehülsen 9, die nach dem Festschrauben des Steuerstabführungsrohres 8 an der Fussplatte 7 des Fussteiles 3 jeweils an den Abstandshaltern 4 anliegend fest mit dem Steuerstabführungsrohr 8 zu verschweissen sind.

Zu diesem Zweck wird in das Steuerstabführungsrohr 8 am Ende mit der Schablone 5 eine in Fig. 2 dargestellte Stange 10 eingeschoben, die als Rohr ausgebildet ist und die am im Steuerstabführungsrohr 8 befindlichen Ende aussen eine zur Stange 10 koaxiale zylinderförmige Stützverdickung A und am anderen Ende aussen einen zur Stange 10 koaxialen zylinderförmigen Anschlagkörper C aufweist, dessen Aussendurchmesser grösser als der Innendurchmesser des Steuerstabführungsrohres 8 ist. Zwischen der Stützverdickung A und dem Anschlagkörper C befinden sich aussen auf der als Rohr ausgebildeten Stange 10 mit Abstand voneinander und mit Abstand von der Stützverdickung A und dem Anschlagkörper C zur Stange 10 koaxiale zylinderförmige Stützverdickungen B, die wie die Stützverdickung A einen Aussendurchmesser haben, der etwas kleiner als der Innendurchmesser des Steuerstabführungsrohres 8 ist und die sich bei bis zum Anschlagkörper C in das Steuerstabführungsrohr 8 eingeschobener Stange 10 genau an bzw. unter den Stellen dieses Steuerstabführungsrohres 8 befinden, an denen aussen die Haltehülsen 9 jeweils beiderseits der Abstandshalter 4 festzuschweissen sind.

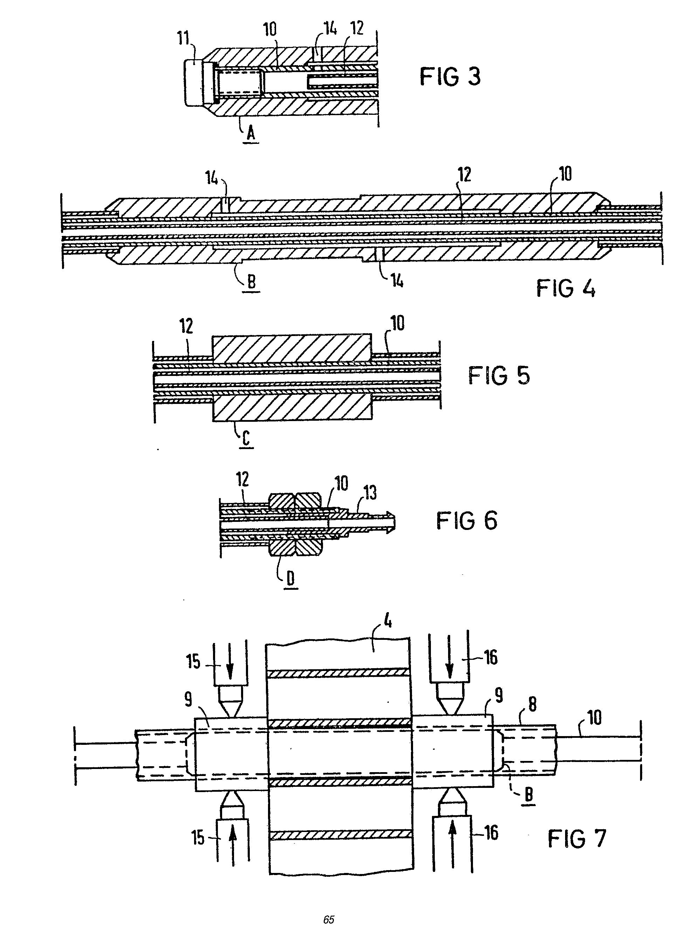

Wie die Figuren 3 bis 6 zeigen, ist die als Rohr ausgebildete Stange 10 am Ende mit der Stützverdickung A mit einem Endstopfen 11 gasdicht verschlossen. Ferner befindet sich in der als Rohr ausgebildeten Stange 10 koaxial ein Innenrohr 12 mit einem Aussendurchmesser, der kleiner als der Innendurchmesser der als Rohr ausgebildeten Stange 10 ist. Dieses Innenrohr 12 ist am Ende der als Rohr ausgebildeten Stange 10, an dem sich der Anschlagkörper C befindet, spielfrei durch einen Stopfen 13 geführt, mit dem die als Rohr ausgebildete Stange 10 am Ende mit dem Anschlagkörper C gasdicht verschlossen ist. Dort bildet diese Stange 10 ein Anschlussteil D für einen Pressluftschlauch, der Pressluft in das Innenrohr 12 einspeist, welches an beiden Enden offen ist und bis zur Stützverdickung A reicht, jedoch Abstand vom Endstopfen 11 hat.

In den Stützverdickungen A und B befinden sich jeweils drei an beiden Enden offene Radialbohrungen 14, die auch durch die Wand der als Rohr ausgebildeten Stange 10 greifen und in den Innenraum dieser als Rohr ausgebildeten Stange 10 münden.

Nach dem Arbeitsgang des Einfädelns des Steuerstabführungsrohres 8 durch die Schablone 5 und die Haltehülsen 9 und dem Festschrauben des Steuerstabführungsrohres 8 an der Fussplatte 7 des Fussteiles 3 wird Pressluft aus dem am Anschlussteil D auf das Innenrohr 12 aufgeschobenen, nicht dargestellten Pressluftschlauches durch das Innenrohr 12 in die als Rohr ausgebildete Stange 10 und durch die Radialbohrungen 14 wieder hinausgeführt. Diese von der Pressluft durchströmte, als Rohr ausgebildete Stange 10 wird sodann in das Steuerstabführungsrohr 8 am offenen Rohrende mit der Schablone 5 bis zum Anschlagkörper C eingeschoben. Hierbei gleiten die Stützverdickungen A und B auf einem durch die Pressluft im Steuerstabführungsrohr 8 gebildeten Luftkissen. Diese Stützverdickungen A und B können sich deshalb nicht beim Einschieben der als Rohr ausgebildeten Stange 10 innen am Steuerstabführungsrohr 8 festfressen.

Nachdem die als Rohr ausgebildete Stange 10 bis zum Anschlagkörper C in das Steuerstabführungsrohr 8 eingeführt ist, wird die Pressluft abgeschaltet. Hierauf werden die Haltehülsen 9 beiderseits der Abstandshalter 4 mit Hilfe von Schweisselektroden 15 und 16 einer Schweisszange, die in Fig. 7 zu erkennen sind, aussen am Steuerstabführungsrohr 8 durch Widerstandspunktschweissen festgeschweisst. Die in Fig. 7 im Steuerstabführungsrohr 8 gestrichelt angedeutete Stützverdickung B aussen auf der als Rohr ausgebildeten Stange 10 verhindert während dieses Schweissvorganges ein Verformen der Haltehülsen 9 und des Steuerstabführungsrohres 8 durch den mit den Schweisselektroden 15 und 16 auf die jeweils zwischen zwei Schweisselektroden 15 und 16 der elektrischen Schweisszange befindlichen Haltehülsen 9 und das Steuerstabführungsrohr 8 ausgeübten Druck.

Nach Beendigung dieses aus dem Schweissen bestehenden Arbeitsganges wird die Druckluft wieder eingeschaltet und im Steuerstabführungsrohr 8 ein Luftkissen für die Stützverdickungen A und B der als Rohr ausgebildeten Stange 10 gebildet. Diese Stange 10 kann dann wieder ohne Gefahr des Festfressens der Stützverdickungen A und B im Steuerstabführungsrohr 8 aus diesem Steuerstabführungsrohr 8 herausgezogen werden.

Nach dem Einfädeln aller in der Schablone 6 vorgeschriebenen Steuerstabführungsrohre in die Abstandshalter 4 auf dem Assembliertisch 2 und Festschrauben dieser Steuerstabführungsrohre an der Fussplatte 7 des Fussteiles 3 kann die Schablone 6 vom Assembliertisch 2 entfernt werden. Sodann können mit Kernbrennstoff gefüllte Brennstäbe in die Maschen der Abstandshalter 4 eingefädelt werden, die nicht von Steuerstabführungsrohren besetzt sind. Sodann wird an diesen Steuerstabführungsrohren 8 an dem Rohrende, an dem sich die Schablone 6 befand, die Kopfplatte eines nicht dargestellten Kopfteiles des Kernreaktorbrennelementes z.B. an einer nicht dargestellten an diesem Rohrende aussen festgeschweissten Haltehülse mit Innengewinde festgeschraubt. In diesem nun fertig zusammengebauten Kernreaktorbrennelement, haben die in die Abstandshalter 4 eingefädelten, ebenfalls nicht dargestellten Brennstäbe sowohl von der Fussplatte des Fussteiles als von der Kopfplatte des Kopfteiles Abstand.

## Patentansprüche

1. Verfahren zum Zusammenbau eines Kernreaktorbrennelementes, welches ein Kopf- und ein Fussteil sowie gitterförmige Abstandshalter für Kernbrennstoff enthaltende Brennstäbe und Steuerstabführungsrohre aufweist, von denen die Steuerstabführungsrohre jeweils in einem ersten Arbeitsgang in die Abstandshalter eingefädelt und in einem nachfolgenden zweiten Arbeitsgang aussen an Schweissstellen durch Widerstandspunktschweissen mit Haltekörpern, insbesondere mit Haltehülsen für die Abstandshalter und/oder Kopf-oder Fussteile versehen werden, dadurch gekennzeichnet, dass zum Widerstandspunktschweissen nach dem ersten Arbeitsgang eine aussen Stützverdickungen (A; B) aufweisende Stange (10) in das in die Abstandshalter (4) eingefädelte Steuerstabführungsrohr (8) so eingeschoben wird, dass sich zumindest an jeder Schweissstelle dieses Steuerstabführungsrohres (8) eine Stützverdickung (B) befindet, und dass sodann im zweiten Arbeitsgang die Haltekörper (9) mit den beiden Schweisselektroden (15; 16) einer elektrischen Schweisszange gegen die Schweissstellen aussen am Steuerstabführungsrohr (8) gepresst werden.

2. Verfahren nach Anspruch 1, dadurch gekennzeichnet, dass eine als Rohr ausgebildete Stange (10) verwendet wird, die durch die Stützverdickungen (A; B) eine in den Rohrinnenraum mündende Radialbohrung (14) aufweist, und dass beim Einschieben dieser Stange (10) in das Steuerstabführungsrohr (8) und/oder beim Herausziehen dieser Stange (10) aus dem Steuerstabführungsrohr (8) ein Gas, vorzugsweise Luft, durch die als Rohr ausgebildete Stange (10) und die Radialbohrungen (14) in das Steuerstabführungsrohr (8) geblasen wird.

## Revendications

1. Procédé de montage d'un assemblage combustible de réacteur nucléaire, qui comprend un embout supérieur et un embout inférieur, ainsi que des entretoises en forme de grille pour des crayons combustibles, contenant du combustible nucléaire et des tube-guide, ceux-ci étant, dans une première phase opératoire, enfilés dans les entretoises et, étant munis, dans une seconde phase opératoire ultérieure, de pièces de maintien, notamment de douilles de maintien, des entretoises et/ou des embouts supérieur ou inférieur, situés à l'extérieur et au niveau d'emplacements de soudure réalisés par des soudures par résistance par points, caractérisé en ce qu'il consiste pour le soudage par résistance par points après la première phase opératoire, à introduire une tige (10) ayant extérieurement des parties épaissies d'appui (A; B) dans le tube-guide (8) enfilé dans les entretoises (4) de manière qu'au moins une partie épaissie d'appui (B) se trouve à chaque emplacement à souder de ce tube-guide (8), et immédiatement dans la seconde phase opératoire, à appliquer les pièces de maintien (9) par les deux électrodes de soudage (15; 16) d'une pince de soudage par voie électrique sur les emplacements à souder à l'extérieur de tube-guide (8).

2. Procédé selon la revendication 1, caractérisé en ce qu'il consiste à utiliser une tige (10) en forme de tube, qui comporte un perçage radial débouchant à l'intérieur du tube en passant à travers les parties épaissies d'appui (A; B) et à insuffler, lorsque cette tige (10) est introduite dans le tube-guide (8) et/ou lorsque cette tige (10) est sortie du tube-guide (8), du gaz, de préférence de l'air, dans la tige (10) en forme de tube et dans les perçages radiaux (14) du tube-guide (8).

## Claims

1. A method of assembling a nuclear reactor fuel assembly which has a headpiece and a footpiece, as well as lattice-shaped range spacers for fuel rods containing nuclear fuel and guide tubes for the control rods, the guide tubes for the control rods being in each case threaded through the range spacers in a first operation and in a succeeding second operation, are provided by resistance spot welding on the outside at welding points with holding members, in particular holding sleeves, for the range spacers and/or for the headpieces or footpieces, characterised in that for resistance spot welding, after the first operation a rod (10) provided with supporting thickened portions (A; B) is so inserted into the control rod guide tube (8) which is threaded into the range spacers (4), that a thickened portion (B) is positioned at least at every welding point of this control rod guide tube (8); and that in the second operation, the holding members (9) are then pressed, together with the two welding electrodes (15; 16) of an electric welding tong, against the welding points on the outside of the control rod guide tube (8).

2. A method as claimed in Claim 1, characterised in that a rod (10) is used which is in the form of a tube having a radial bore (14) through the thickened portions (A; B) opening into the interior of the tube; and that when this rod (10) is inserted into the control rod guide tube (8) and/or when this rod (10) is withdrawn from the control rod guide tube (8), a gas, preferably air, is blown through the tubular rod (10), and through the radial bores (14) into the control rod guide tube (8).

1/2

FIG 1

FIG 2

2/2

FIG 3

FIG 4

FIG 5

FIG 6

FIG 7